Europäisches Patentamt

European Patent Office

Office européen des brevets

(11) Veröffentlichungsnummer: **0 511 595 A1**

# EUROPÄISCHE PATENTANMELDUNG

(21) Anmeldenummer: **92106986.0**

(22) Anmeldetag: **24.04.92**

(51) Int. Cl.⁵: **G01F 1/58**

(30) Priorität: **30.04.91 DE 4114137**

(43) Veröffentlichungstag der Anmeldung:
**04.11.92 Patentblatt 92/45**

(84) Benannte Vertragsstaaten:
**DE DK FR GB IT NL SE**

(71) Anmelder: **BOPP & REUTHER MESSTECHNIK GmbH**
**Carl-Reuther-Strasse 1**
**W-6800 Mannheim 31(DE)**

(72) Erfinder: **Haug, Peter**
**Schelmenrasenstrasse 35**
**W-7060 Schorndorf(DE)**
Erfinder: **Pilz, Jochen**
**Jakob-Müller-Strasse 25**
**W-6840 Hüttenfeld(DE)**

(74) Vertreter: **Dipl.-Ing. Heiner Lichti, Dipl.-Phys.**
**Dr. Jost Lempert, Dipl.-Ing. Hartmut Lasch**
**Postfach 41 07 60, Bergwaldstrasse 1**
**W-7500 Karlsruhe 41(DE)**

(54) **Durchflussmessgerät.**

(57) Es wird ein magnetisch-induktives Durchfluß-meßgerät für Flüssigkeiten mit einem die Flüssigkeit führenden Meßrohr und einem Elektromagneten zur Erzeugung eines niederfrequenten Magnetfeldes im Meßrohr vorgeschlagen, wobei der Elektromagnet wenigstens eine Erregerspule und einen das Meß-rohr umgebenden Kern aufweist. Optimale Gestaltungsmöglichkeiten werden dadurch erreicht, daß der Kern aus einem ferromagnetischen Pulver verformt ist, dessen Pulverpartikel zur Vermeidung von Wirbelströmen elektrisch isolierend oder schlecht leitend miteinander verbunden sind.

EP 0 511 595 A1

Die Erfindung betrifft ein magnetisch-induktives Durchflußmeßgerät für Flüssigkeiten mit einem die Flüssigkeit führenden Meßrohr und einem Elektromagneten zur Erzeugung eines niederfrequenten Magnetfeldes im Meßrohr, wobei der Elektromagnet wenigstens eine Erregerspule und einen das Meßrohr umgebenden Kern aufweist.

Derartige Durchflußmeßgeräte nützen das Induktionsprinzip, wonach bei bewegten Ladungsträgern durch Anlegen eines Magnetfeldes senkrecht zur Bewegungsrichtung eine Spannung induziert wird. Die Spannung liegt senkrecht zur Bewegungsrichtung und senkrecht zum Magnetfeld an und wird über entsprechend angeordnete Elektroden abgegriffen. Diese Meßspannung ist proportional zur mittleren Geschwindigkeit, so daß mit Hilfe dieser Spannung der Volumen- bzw. Massenstrom einer leitfähigen Flüssigkeit in dem Meßrohr bestimmt werden kann.

Bevorzugt werden zeitlich variierende Magnetfelder verwendet. Diese sind dann entweder geschaltet oder wechseln periodisch mit Frequenzen unter 1 kHz. Vielfach werden netzfrequente Magnetfelder eingesetzt. Zur Erzeugung wird ein Elektromagnet mit einem Kern verwendet. Der Kern ist in der Regel aus geschichteten Blechen aufgebaut, wie dies bei Netztransformatoren üblich ist. Der Kern bildet zwei gegenüberliegende Pole, zwischen denen das Meßrohr angeordnet ist, um das Magnetfeld im Meßrohr zu erzeugen. Die magnetischen Verluste werden minimiert, indem der Kern das Meßrohr vollständig umgibt, so daß der magnetische Fluß überwiegend innerhalb des Kerns verläuft. Dies führt jedoch zu einer beträchtlichen Baugröße des Gerätes, insbesondere quer zum Meßrohr. Weiterhin ist die Montage aufwendig, da auf dem Meßrohr zunächst Flansche z. B. durch Schweißen positioniert werden müssen und erst anschließend der Kern auf dem Meßrohr aufgesetzt werden kann. Der Nachteil großer Baugröße wird bei einer anderen bekannten Ausführung vermieden, indem der magnetische Rückschluß über Wikkelbänder erfolgt, doch ist hier eine aufwendige Fertigungstechnik zu verwirklichen.

Der Erfindung liegt die Aufgabe zugrunde, ein Durchflußmeßgerät der eingangs genannten Art dahingehend weiterzubilden, daß eine einfache Anpassung an bauliche Rahmenbedingungen und eine Optimierung des Magnetfeldes in einfacher Weise möglich ist.

Die Aufgabe wird dadurch gelöst, daß der Kern aus einem ferromagnetischen Pulver geformt ist, dessen Pulverpartikel zur Vermeidung von Wirbelströmen elektrisch isolierend oder schlecht leitend miteinander verbunden sind.

Die Ausbildung als Formteil gestattet zum einen eine Optimierung des Magnetfeldes durch eine entsprechende Kerngeometrie und zum anderen eine Anpassung an bauliche Rahmenbedingungen in einfacher Weise. Weiterhin ergibt sich eine einfache und preiswerte Herstellung. Durch entsprechende Auswahl des ferromagnetischen Materials wird eine hohe Permeabilität und damit hohe magnetische Flußdichte realisiert. Der Luftspalt zwischen den Polen beträgt zweckmäßigerweise mehr als 5 mm.

Eine hohe Festigkeit wird dadurch erreicht, daß der Kern aus wenigstens einem durch Kalt- oder Warmpressen erhaltenen Formteil gebildet ist. Statt dessen kann aber auch vorgesehen sein, daß der Kern aus wenigstens einem durch Spritzgießen oder Sintern erhaltenen Formteil gebildet ist.

Vorzugsweise besteht das Pulver im wesentlichen aus Fe. Fe hat den bekannten Vorteil hoher Permeabilität. Das ferromagnetische Pulver kann mit einem die Pulverpartikel isolierenden Kunststoffbinder versetzt sein. Praktische Versuche haben gezeigt, daß bereits etwa 1 Vol.% Kunststoffbinder ausreicht, um durch Warmpressen zwischen etwa 90 und 150°C ausreichend formstabile Kerne mit ausgezeichneten elektromagnetischen Eigenschaften erhalten werden können.

Zur Verringerung von Wirbelströmen kann das Pulver bis 10 Gew. % Si aufweist. Durch diese Maßnahme werden sonst auftretende Wirbelströme nachhaltig reduziert.

Eine bevorzugte Ausführung zeichnet sich dadurch aus, daß das Pulver aus etwa 95 - 98 Gew. % Fe, bis zu 3 Gew. % Si, Rest isolierendes Material, besteht. Diese Mischung weist einerseits eine hohe Permeabilität auf und zeigt andererseits nur geringe Verluste durch Wirbelströme. Dabei kann auch vorgesehen sein, daß Fe ganz oder teilweise durch Fe/Ni, wie bei Trafoblechen an sich bekannt, ersetzt ist, da sich hiermit ausgezeichnete magnetische Eigenschaften ergeben. Das isolierende Material kann beispielsweise ein Binder sein, um eine ausreichende mechanische Stabilität zu erhalten.

In einer weiteren Ausführungsform ist vorgesehen, daß das Pulver und/oder die Isolierung zumindest teilweise aus ferrimagnetischem Material besteht. Diese Materialien zeichnen sich durch eine verhältnismäßig große Permeabilität aus, sind jedoch in allgemeinen elektrisch nicht leitfähig. Dadurch lassen sich in einfacher Weise Wirbelströme im Formteil minimieren.

Bevorzugt besteht die Isolierung aus einem Thermoplast, einem Duroplast, aus Oxiden, Karbiden, Nitriden oder dergleichen. Diese Materialien bewirken eine gute elektrische Isolation und führen beim Preßformen zu einem mechanisch sehr stabilen Körper. Genauso kann auch Kunstharz als Isolationsund Verbindungsmaterial verwendet werden.

Die Herstellung des Formteils erfolgt in Abhängigkeit vom verwendeten Pulver und Isoliermaterial.

Es kann vorgesehen sein, daß das Formteil kalt- oder warmgepreßt, bei Unterdruck und/oder durch Sintern hergestellt ist. So lassen sich gewünschte mechanische und magnetische Eigenschaften des Formteils realisieren.

Zur Minimierung der magnetischen Verluste weist der Kern zwei, vier oder mehr Rückschlüsse auf.

In bevorzugter Ausführung ist vorgesehen, daß das Formteil als X-Kern mit vier Rückschlüssen ausgebildet ist. Der X-Kern ergänzt dabei die im allgemeinen zylindrische Form der Erregerspule zu einem Quader. So ergibt sich eine optimale Raumausnutzung, insbesondere wenn ein Einbau des Durchflußmeßgerätes in ein quaderförmiges Gehäuse erfolgt.

Alternative Ausführungsformen ergeben sich dadurch, daß das Formteil als M-Kern mit zwei Rückschlüssen oder als Schalenkern ausgebildet ist.

Gerade bei großen Nennweiten des Meßrohrs wird die Führung des Magnetfeldes dadurch verbessert, daß wenigstens ein Pol mit einem Polschuh an die Außenkontur des Meßrohrs angepaßt ist.

Dabei wird zudem eine platzsparende Ausbildung dadurch ermöglicht, daß der Kern zur Aufnahme einer Sattelspule ausgebildet ist.

Bei großen Nennweiten des Außenrohrs kann eine Verbundtechnik derart angewendet werden, daß der Kern aus geschachtelten Blechpaketen kombiniert mit Formteilen gebildet ist.

Die Pole und Rückschlüsse können zylindrisch oder konisch ausgebildet sein. Bei einer konischen Ausbildung und vorgegebenen geometrischen Verhältnissen zwischen Pol und Rückschluß läßt sich eine Minimierung des Streufeldes im Bereich des erzeugten Magnetfeldes erreichen. Auch läßt sich der Formkörper einfacher entformen.

Es ist insbesondere bei der Ausbildung als X- Kern vorgesehen, daß bei kleinen Nennweiten des Meßrohres die Erstreckung des Elektromagneten in einer Richtung senkrecht zur Achse des Meßrohres im wesentlichen durch die Ausdehnung der Erregerspule bestimmt ist. Dadurch ist es möglich, Durchflußmesser auch bei sehr eng liegenden Rohrleitungen anzuordnen.

Eine bevorzugte Ausführungsform zeichnet sich dadurch aus, daß der Kern aus wenigstens zwei Formteilen gebildet ist, in deren Trennebene das Meßrohr angeordnet ist. Dies ermöglicht eine besonders einfache Montage des Formteils auf dem Meßrohr, da beide Teile des Elektromagneten unter Einschluß des Meßrohres zusammengefügt werden. Der Kern kann aber auch z. B. als M-Kern aus einem Formteil gebildet sein.

Eine optimale Führung des magnetischen Flusses im Kern zur Erzielung einer großen magnetischen Flußdichte im Meßrohr ergibt sich dadurch, daß das Meßrohr zwischen zwei angeformten Polen der Formteile angeordnet ist.

Gerade bei mehrteiligen Ausführungen ergibt sich eine einfache Montage, wenn im Formteil Ausnehmungen für Verbindungselemente vorgesehen sind. Vorzugsweise weist das Formteil auch Ausnehmungen, Nuten oder Löcher zur Fixierung von Anschlußleitungen auf.

Die Erfindung wird nachstehend anhand der Zeichnung mehrerer Ausführungsbeispiele näher erläutert. Es zeigen:

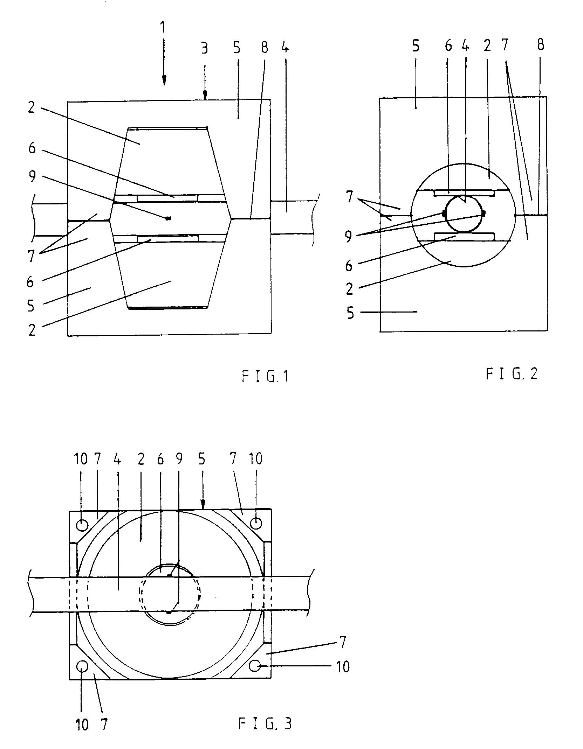

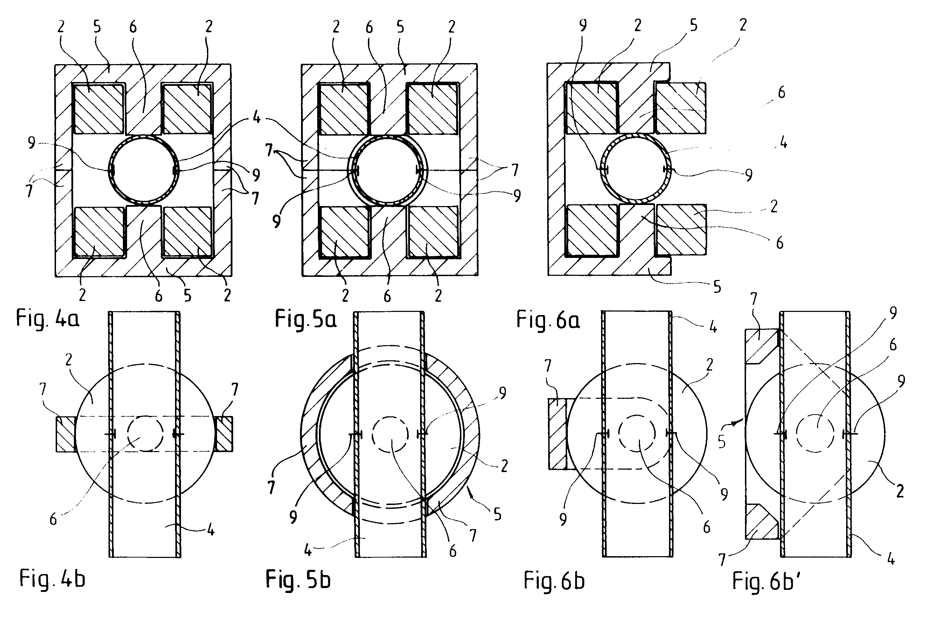

Figur 1
eine Seitenansicht eines ersten Ausführungsbeispiels quer zur Durchflußrichtung;
Figur 2
eine Seitenansicht des Gerätes nach Figur 1 in Durchflußrichtung;
Figur 3
eine Draufsicht auf die Trennebene des Elektromagneten nach Figur 1;
Figur 4a bis 7a
weitere Ausführungsbeispiele im Radialschnitt durch das Meßrohr; und
Figur 4b bis 7b
die Ausführungsbeispiele nach Figur 4a bis 7a im Schnitt durch die Trennebene der Elektromagnete.

Das Durchflußmeßgerät 1 nach Figur 1 weist Erregerspulen 2 und einen Kern 3 auf. Die Spulen 2 und der Kern 3 bilden einen Elektromagneten, der in einem Meßrohr 4 ein Magnetfeld erzeugt. Der Kern 3 besteht in dieser Ausführung aus zwei Formteilen 5, die jeweils einen Pol 6 aufweisen. Der Kern 3 umgibt das Meßrohr 4, wobei die Pole 6 bezüglich des Meßrohres 4 diametral gegenüberliegend angeordnet sind. Jeder Pol 6 ist von einer der Spulen 2 umgeben. Die Formteile 5 sind als X- Kerne ausgebildet und weisen jeweils vier als Jochbeine ausgebildete Rückschlüsse 7 auf, die in einer Trennebene 8 denen des jeweils anderen Formteils 5 anliegen und so den Magnetfluß von einem Pol 6 zum anderen innerhalb des Kerns 3 herstellen. In der dargestellten Ausführungsform sind beide Formteile 5 spiegelsymmetrisch ausgeführt, wobei die Achse des Meßrohres 4 in der Trennebene 8 liegt und dementsprechend eine einfache Montage des Durchflußmeßgerätes 1 ermöglicht wird.

In Figur 3 ist in der Draufsicht das untere Preßformteil 5 des Durchflußmeßgerätes 1 mit Meßrohr 4 zu erkennen. Am Meßrohr 4 sind zwei Elektroden 9 zur Aufnahme einer durch das Magnetfeld induzierten Spannung angeordnet. In den Rückschlüssen 7 sind Ausnehmungen 10 zur Auf- nahme von Verbindungselementen zum Zusam- menfügen der beiden Preßformteile 5 vorgesehen.

Zur Bestimmung der Geschwindigkeit einer leitfähigen Flüssigkeit im Meßrohr 4 wird mit Hilfe der Spulen 2 ein Magnetfeld senkrecht zur Bewegungsrichtung der Flüssigkeit erzeugt. Senkrecht zur Bewegungsrichtung und senkrecht zum Magnetfeld wird eine geschwindigkeitsproportionale Spannung induziert, die mit Hilfe der Elektroden 9 abgegriffen und ausgewertet wird. Die Auswerteschaltung ist nicht dargestellt.

Die Verwendung eines geformten Kerns 3 gestattet eine sehr variable Gestaltung. So wird die Breite des Durchflußmeßgeräts 1, wie Figur 3 zu entnehmen ist, lediglich durch die Quererstreckung der Spule 2 bestimmt, was insbesondere auf die Ausbildung der Formteile 5 als X-Kerne zurückzuführen ist. Dies gestattet die Konstruktion eines sehr schmal bauenden Durchflußmeßgerätes 1. Weiterhin ist es in einfacher Weise möglich, durch eine Optimierung der Kerngeometrie die Bildung von Streufeldern zwischen dem Pol 6 und den als Jochbeinen ausgebildeten Rückschlüssen 7 zu minimieren. Dies ist in der dargestellten Ausführung dadurch realisiert, daß die Jochbeine, wie Figur 1 und 2 zu entnehmen ist, konisch ausgebildet sind, so daß die Rückschlüsse 7 im Bereich der Trennebene 8 einen möglichst großen Abstand zu den Polen 6 und auch zu den Spulen 2 aufweisen. Weiterhin ergibt sich eine sehr einfache Montage des Durchflußmeßgerätes 1, da durch die Trennung des Kerns 3 in der Trennebene 8 ein einfaches Einlegen des Meßrohrs 4 möglich ist, so daß Flansche oder sonstige Verbindungselemente schon vor dem Zusammenbau des Durchflußmeßgerätes 1 am Meßrohr positioniert werden können.

Für die folgenden Ausführungsbeispiele werden die gleichen Bezugszeichen wie beim ersten Ausführungsbeispiel verwendet.

Figur 4a zeigt einen M-Kern, der bevorzugt für ein Meßrohr 4 mit kleinen Nennweiten aus einem Formteil 5 einstückig ausgebildet wird. Das Formteil kann aber auch, wie hier angedeutet, in der Axialebene des Meßrohres 4 geteilt sein. Figur 4b ist zu entnehmen, daß der M-Kern nur zwei Rückschlüsse 7 aufweist.

Figur 5a stellt einen zweigeteilten Schalenkern dar. Dabei bildet der Kern 5 einen senkrecht zur Achse des Meßrohres 4 angeordneten Kreiszylinder. Wie sich aus Figur 5b ergibt, weist diese Ausführung in Querschnitt großflächige Rückschlüsse 7 auf. So wird eine gute Rückführung des Magnetfeldes gewährleistet.

Eine sehr einfache Ausführungsvariante ergibt sich bei einer U-Form des Kerns nach Figur 6a. Diese Ausführungsform ermöglicht insbesondere eine leichte Montage, da der Elektromagnet seitlich auf das Meßrohr aufgeschoben werden kann. Aus Figur 6b und Figur 6b' ist erkennbar, daß diese Ausführung entweder durch einen einfachen U-Kern mit einem Rückschluß 7 oder auch durch einen halben X-Kern (gemäß Fig. 1 bis 3) mit zwei Rückschlüssen 7 gebildet sein kann. Hierbei weist der halbe X-Kern den Vorteil auf, daß die Erstreckung des Elektromagnets zumindest in einer Richtung durch die Ausdehnung der Spule 2 bestimmt ist.

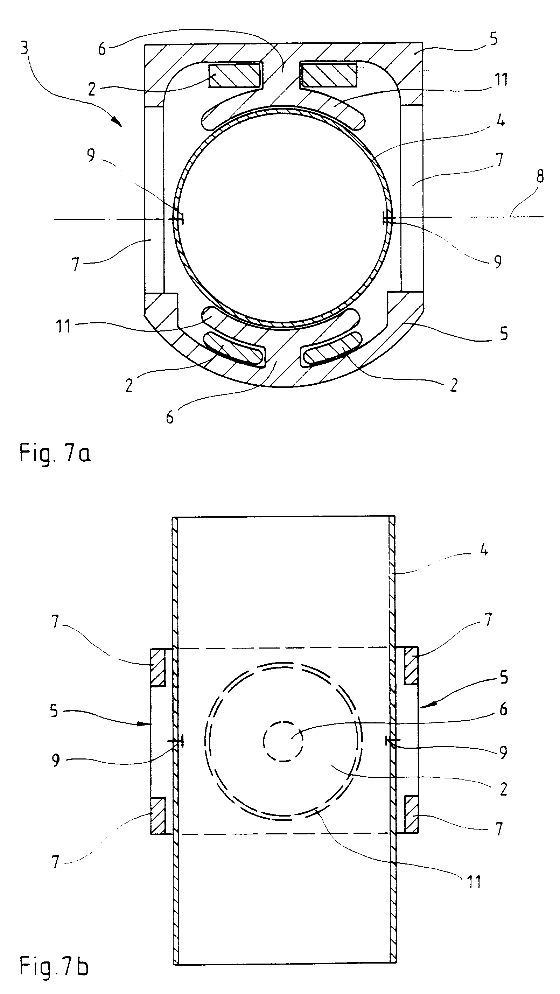

Figur 7a zeigt eine Ausführungsform, die insbesondere für Meßrohre 4 mit großen Nennweiten geeignet ist. Hierbei weisen die Pole 6 Polschuhe 11 auf, die an die Außenkontur des Meßrohres 4 angepaßt sind. Hierdurch wird eine besonders gute Führung des Magnetfeldes realisiert. Das untere Formteil 5 ist so ausgebildet, daß die Spule 2 als Sattelspule ausgeführt ist. Dies gestattet eine besonders platzsparende Konstruktion des Elektromagneten. Alternativ kann jedoch auch eine herkömmliche Zylinderspule 2, wie in der oberen Hälfte dargestellt, verwendet werden. Der Kern kann zwei oder vier Rückschlüsse aufweisen. Bei dieser Ausführung kann der Kern 3 aus mehreren Formteilen oder auch aus Formteilen in Kombination mit geschichteten Blechpaketen aufgebaut sein. Figur 7b ist zu entnehmen, daß bei dieser Ausführungsform vergleichbar zum X-Kern vier Rückschlüsse 7 einen guten magnetischen Rückschluß gewährleisten.

**Patentansprüche**

1. Magnetisch-induktives Durchflußmeßgerät für Flüssigkeiten mit einem die Flüssigkeit führenden Meßrohr und einem Elektromagneten zur Erzeugung eines niederfrequenten Magnetfeldes im Meßrohr, wobei der Elektromagnet wenigstens eine Erregerspule und einen das Meßrohr umgebenden Kern aufweist, **dadurch gekennzeichnet**, daß der Kern (3) aus einem ferromagnetischen Pulver geformt ist, dessen Pulverpartikel zur Vermeidung von Wirbelströmen elektrisch isolierend oder schlecht leitend miteinander verbunden sind.

2. Gerät nach Anspruch 1, dadurch gekennzeichnet, daß der Kern (3) aus wenigstens einem durch Pressen erhaltenen Formteil (5) gebildet ist.

3. Gerät nach einem der vorangehenden Ansprüche, dadurch gekennzeichnet, daß das Formteil (5) kalt- oder warmgepreßt ist.

4. Gerät nach einem der vorangehenden Ansprüche, dadurch gekennzeichnet, daß das Formteil (5) bei Unterdruck hergestellt ist.

5. Gerät nach einem der vorangehenden Ansprüche, dadurch gekennzeichnet, daß das Formteil (5) gesintert ist.

6. Gerät nach Anspruch 1 oder 2, dadurch gekennzeichnet, daß der Kern (3) aus wenigstens einem durch Spritzgießen erhaltenen Formteil (5) gebildet ist.

7. Gerät nach Anspruch 1, dadurch gekennzeichnet, daß das Pulver im wesentlichen aus Fe besteht.

8. Gerät nach einem der vorangehenden Ansprüche, dadurch gekennzeichnet, daß das ferromagnetische Pulver mit einem die Pulverpartikel isolierenden Kunststoffbinder versetzt ist.

9. Gerät nach einem der vorangehenden Ansprüche, dadurch gekennzeichnet, daß der Kunststoffbinder mit ca. 1 Vol.% zugemischt ist.

10. Gerät nach einem der vorangehenden Ansprüche, dadurch gekennzeichnet, daß das Pulver bis 10 Gew. % Si aufweist.

11. Gerät nach einem der vorangehenden Ansprüche, dadurch gekennzeichnet, daß das Pulver aus etwa 95 - 98 Gew. % Fe, bis zu 3 Gew. % Si, Rest Binder besteht.

12. Gerät nach einem der vorangehenden Ansprüche, dadurch gekennzeichnet, daß das Pulver und/oder die Isolierung zumindest teilweise aus ferrimagnetischem Material besteht.

13. Gerät nach einem der vorangehenden Ansprüche, dadurch gekennzeichnet, daß die Isolierung aus einem Thermoplast, einem Duroplast, aus Oxiden, Karbiden, Nitriden oder dergleichen besteht.

14. Gerät nach einem der vorangehenden Ansprüche, dadurch gekennzeichnet, daß die Pulverpartikel mit der Isolierung beschichtet sind.

15. Gerät nach einem der vorangehenden Ansprüche, dadurch gekennzeichnet, daß der Kern (3) zwei, vier oder mehr Rückschlüsse (7) aufweist.

16. Gerät nach einem der vorangehenden Ansprüche, dadurch gekennzeichnet, daß das Formteil (5) als X-Kern mit vier Rückschlüssen (7) ausgebildet ist.

17. Gerät nach einem der vorangehenden Ansprüche, dadurch gekennzeichnet, daß das Formteil (5) als M-Kern mit zwei Rückschlüssen (7) ausgebildet ist.

18. Gerät nach einem der vorangehenden Ansprüche, dadurch gekennzeichnet, daß das Formteil (5) als Schalenkern ausgebildet ist.

19. Gerät nach einem der vorangehenden Ansprüche, dadurch gekennzeichnet, daß wenigstens ein Pol (6) mit einem Polschuh (11) an die Außenkontur des Meßrohres (4) angepaßt ist.

20. Gerät nach einem der vorangehenden Ansprüche, dadurch gekennzeichnet, daß der Kern (3) zur Aufnahme einer Sattelspule ausgebildet ist.

21. Gerät nach einem der vorangehenden Ansprüche, dadurch gekennzeichnet, daß der Kern (3), insbesondere für große Nennweiten des Meßrohrs, aus geschachtelten Blechpaketen kombiniert mit Formteilen (5) gebildet ist.

22. Gerät nach einem der vorangehenden Ansprüche, dadurch gekennzeichnet, daß die Rückschlüsse (7) und/oder die Pole (6) zylindrisch oder konisch ausgebildet sind.

23. Gerät nach einem der vorangehenden Ansprüche, dadurch gekennzeichnet, daß bei kleinen Nennweiten des Meßrohres (4) die Erstreckung des Elektromagneten in einer Richtung senkrecht zur Achse des Meßrohres (4) im wesentlichen durch die Ausdehnung der Erregerspule (2) bestimmt ist.

24. Gerät nach einem der vorangehenden Ansprüche, dadurch gekennzeichnet, daß der Kern (3) aus wenigstens zwei Formteilen (5) gebildet ist, in deren Trennebene das Meßrohr (4) angeordnet ist.

25. Gerät nach einem der vorangehenden Ansprüche, dadurch gekennzeichnet, daß der Kern (3) aus einem Formteil (5) gebildet ist.

26. Gerät nach einem der vorangehenden Ansprüche, dadurch gekennzeichnet, daß das Meßrohr (4) zwischen zwei angeformten Polen (6) der Formteile (5) angeordnet ist.

27. Gerät nach einem der vorangehenden Ansprüche, dadurch gekennzeichnet, daß im Formteil (5) Ausnehmungen (10) für Verbindungselemente vorgeshen sind.

28. Gerät nach einem der vorangehenden Ansprüche, dadurch gekennzeichnet, daß das Formteil (5) Ausnehmungen, Nuten oder Löcher zur Fixierung von Ausschlußleitungen aufweist.

FIG.1

FIG.2

FIG.3

Fig. 4a  Fig. 5a  Fig. 6a

Fig. 4b  Fig. 5b  Fig. 6b  Fig. 6b'

Fig. 7a

Fig. 7b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 636 764 (FUNFSTUCK) | 1,7,8, 13,18, 20,23, 24,26 | G01F1/58 |
| Y | * das ganze Dokument * | 2,3,5 | |
|  | --- | | |
| X | EP-A-0 418 033 (TOSHIBA) | 1,8,13, 19,20, 24,26 | |
|  | * Seite 6, Zeile 42 - Seite 6, Zeile 48; Abbildungen * | | |
|  | --- | | |
| Y | PATENT ABSTRACTS OF JAPAN vol. 12, no. 450 (C-547)25. November 1988 & JP-A-63 176 446 ( TOKIN CORP ) 20. Juli 1988 * Zusammenfassung * | 2,3,5, 9-11 | |
|  | --- | | |
| Y | US-A-3 827 298 (KAWAMATA ET AL.) | 9-11,15, 17,27 | |
|  | * Spalte 3, Zeilen 18-24 und 50-60; Spalte 4, Zeilen 33-45; Abbildungen * | | RECHERCHIERTE SACHGEBIETE (Int. Cl.5 ) |
|  | --- | | |
| Y | DE-A-4 019 237 (HITACHI) | 15,17, 22,25,27 | G01F |
|  | * Abbildungen * | | |
|  | --- | | |
| Y | EP-A-0 228 883 (AICHI TOKEI DENKI) * Seite 10, Zeile 24 - Seite 11, Zeile 13; Abbildungen * | 22,25 | |
|  | --- | | |
| A | WO-A-8 605 873 (RHEOMETRON) * Seite 4, Zeile 1 - Seite 4, Zeile 30; Abbildungen 1-4 * | 6 | |
|  | --- | | |
| A | PATENT ABSTRACTS OF JAPAN vol. 7, no. 20 (M-188)26. Januar 1983 & JP-A-57 174 401 ( FUJITSU ) 27. Oktober 1982 * Zusammenfassung * | 6 | |
|  | ----- | | |

Der vorliegende Recherchenbericht wurde für alle Patentansprüche erstellt

| Recherchenort | Abschlußdatum der Recherche | Prüfer |
|---|---|---|
| DEN HAAG | 14 AUGUST 1992 | ROSE A.R.P. |